# EUROPEAN PATENT APPLICATION

(11) **EP 1 983 364 A1**
(43) Date of publication of application: **22.10.2008**
(21) Application number: 08154721.8
(22) Date of filing: 17.04.2008
(51) Int. Cl.: G02C 5/00, G02C 11/00

(54) **Sunglass Type Sleep Detecting and Preventing Device**

(30) Priority: 18.04.2007 TW 96113697
(71) Applicant: National Yang-Ming University, Beitou District Taipei City 112 (TW)
(72) Inventor: Kuo, Terry B. J., Hualien County (TW); Yang, Ching-Hsiu, Hualien County (TW)
(74) Representative: Viering, Jentschura & Partner

(57) **Abstract**

The present invention relates to a sunglasses type device for detecting and preventing sleep and a method for detecting and preventing sleep.

## Description

### FIELD OF THE INVENTION

The present invention relates to a sunglasses type device for detecting and preventing sleep and a method for detecting and preventing sleep.

### BACKGROUND OF THE INVENTION

Current long-term physiological signal detection system is based on traditional wire transmission technique. Lots of electrodes need to be placed on a tester, connected to an amplifier by wire for analog/digital signal converting and further digital signal processing. It's rather inconvenient in practical because of numerous wire application and restricted movement for a tester. Therefore current physiological signal detection system is hard to serve as a warning equipment in everyday life.

Lots of detection methods are not easy to operate. They usually require professional technicians with long-term training to accomplish all the physiological examination smoothly. That is why current physiological signal detection system is not easy to handle.

Lately, several wireless systems have been developed by manufacturers. However, most wireless systems can not get rid of wire limitation. For most systems, electrodes still need to be connected to the main machine by wire. After signal amplification and digital signal processing, microcontroller can transmit the digital signal wirelessly. The whole system still needs wire for connection. Although it improves the convenience, it still has the problem of restricted movement of users. Other than that, wire itself is also the source of noise, and the size of most instruments is too big to carry around.

One disadvantage of most current recorder is that it can not monitor a patient's health condition real-time. In other word, current recorder does not have real-time warning function while recording. It would be hard to use for sleep warning and preventing.

In general, a sleep preventing and detecting device includes two parts: a sensor and a digital signal processor. The development of the sensor is the upstream source of this technology. Without appropriate sensor, even an excellent digital signal processor is in no use. However, an accurate sensor with inconvenient operation can not satisfy the desire of convenience and comfort for users either. Therefore, how to design a sensor combined with function, comfort and convenience is the key factor for the technology development.

### SUMMARY OF THE INVENTION

The present invention relates to a sunglasses type device for detecting and preventing sleep.

The present invention also relates to a method for detecting and preventing sleep.

### BRIEF DESCRIPTION OF THE DRAWINGS

Figure 1 shows a diagram of a sunglasses type device for sleep detecting and preventing comprising four electrodes (blue): Ref (50) is a shared reference electrode, EEG (60) is an electroencephalogram input electrode, EOG (70) is an electrooculogram input electrode, and STI (80) is a stimulating electrode to generate weak signals for stimulating or waking up users.

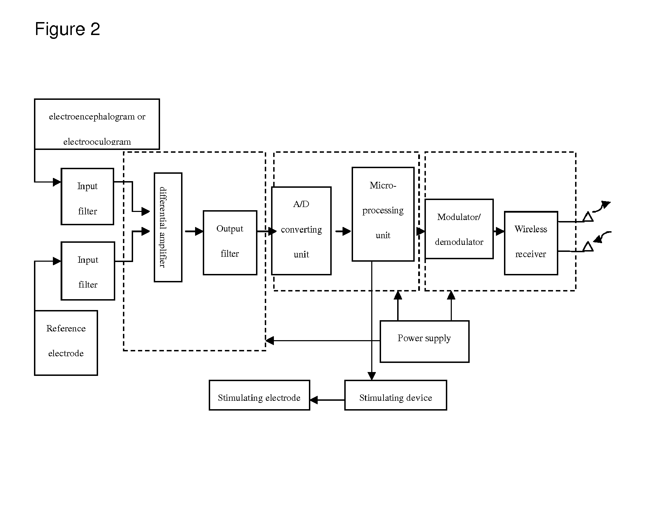

Figure 2 shows a block diagram of one example of internal wireless physiological signal receiver in the present invention.

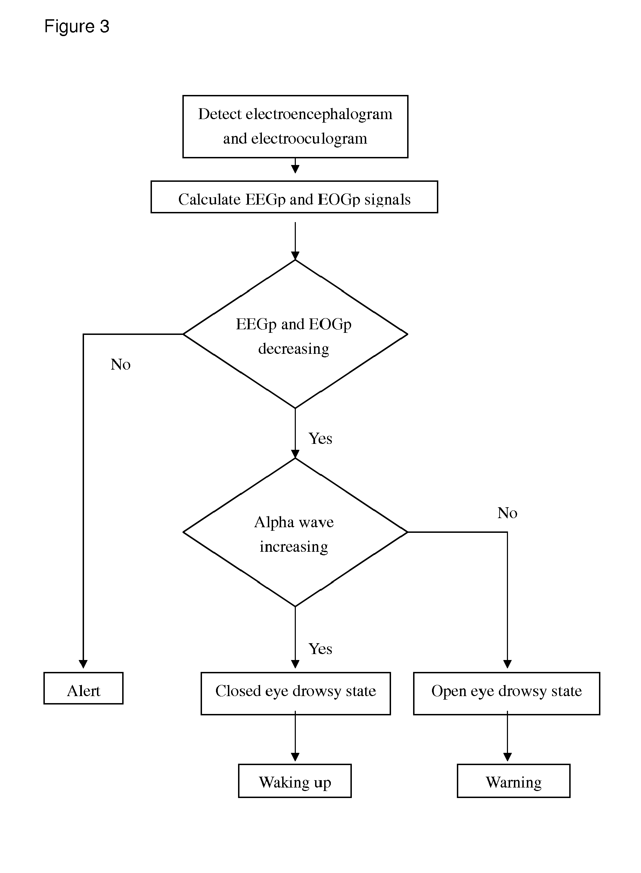

[0010] Figure 3 shows a flow chart of sleep detection and prevention method of the present invention.

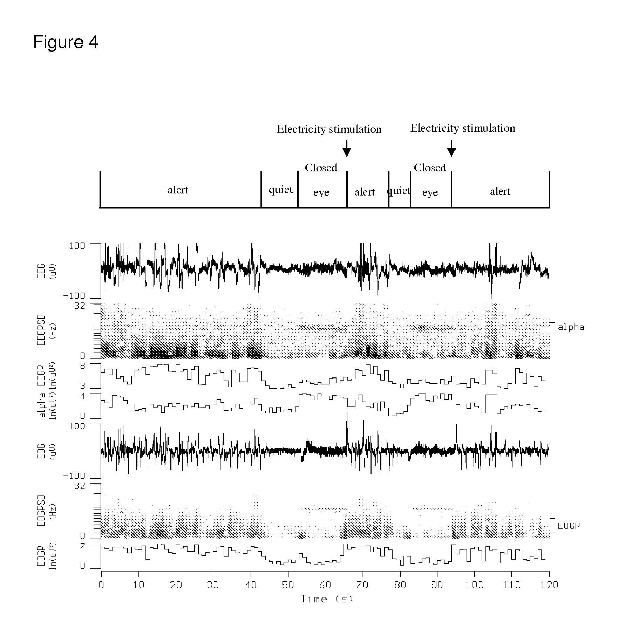

Figure 4 shows a frequency analysis diagram of electroencephalogram from two ear-back electrodes and electrooculogram from a ear-back electrode and a nose-bridge electrode.

Description of major parts in the present invention
10: a sunglasses type device for sleep detecting and preventing
20: a pair of glasses
30: battery
40: amplifier/receiver/buzzer
50: shared reference electrode
60: electroencephalogram input electrode
70: electrooculogram input electrode
80: stimulating electrode

### DETAILED DESCRIPTION OF THE INVENTION

The field of digital diagnostic technology has a lot of breakthrough and innovation lately. Electronic technology is also improving to make electronic device smaller and cost less energy. Recently a sleep analysis system has been developed based on electroencephalogram and electrooculogram signals by observing the changes of electroencephalogram and electrooculogram during one's sleep. One important issue in current sleep medicine is how to avoid accidents by drivers or people performing dangerous works falling asleep on duty. The present invention is to design a convenient and painless sensor which can measure two physiological signals such as electroencephalogram and electrooculogram and transmit signals to remote analytical system wirelessly. These signals, after amplifying and filtering, can serve as a source for later digital signal processing, appropriate analysis and response. Appropriate coordination of the whole instrument and glasses can allow users utilizing the sleep detecting and preventing system as easy as wearing glasses.The present invention relates to a sensing and stimulating system incorporated with a pair of glasses frame, comprising four electrodes such as a reference electrode, an electroencephalogram input electrode, an electrooculogram input electrode and a stimulating electrode. User's electroencephalogram and electrooculogram can be measured to differentiate whether the user is falling asleep or about to fall asleep, and signals can be transmitted wirelessly to a remote receiver for proper analysis and response. When a user is falling asleep or about to fall asleep, the stimulating device on the glasses can transmit weak electricity or generate sound from a buzzer to wake up users for pulling cars over or further responses, or the remote receiver can transmit signals to the police or related department.

The present glasses type sleep detecting and preventing device can not only be easily operated but also monitor whether drivers or people performing dangerous works are going to fall asleep and wake them up on time. The drivers or people performing dangerous works do not need to wear clumsy or inconvenient equipment or any wire, just a pair of glasses type sleep detecting and preventing device. For workers who have to stay alert at work, there is no special limitation for future application. Besides, this glasses type sleep detecting and preventing device is not intrusive; it can monitor part of users' physiological status without suffering. The glasses type sleep detecting and preventing device can further be applied to everyone with personalized physiological monitor. Each individual can use this device at home without further training. Glasses design is diversified, and the device combined with various design of glasses can improve its application such as sunglasses. When the device senses the user is falling asleep, the sensor can transmit signals to a receiver, signals from input electrodes can be transmitted to a receiver, and the receiver can be connected to any computer or portal computer system (cell phone, PDA or specialized computer system) for real-time analysis and necessary stimulation. The stimulating signal is transmitted to the stimulating device of present invention, the stimulating device generates warning or alert to wake up user or make user pull over or other response, or transmit this signal to the police or related department.

Accordingly, the present invention provides a sunglasses type device for detecting and preventing sleep comprises:
(a) a pair of glasses,
(b) a reference electrode, which is attached to the frame of the glasses,
(c) an electroencephalogram input electrode, which is attached to the frame of the glasses,
(d) an electrooculogram input electrode, which is attached to the frame of the glasses, and
(e) a stimulating electrode, which is attached to the frame of the glasses.

In a preferred embodiment the electroencephalogram input electrode detects weak electroencephalogramic signals from the back of the ear as the source for further digital signal processing after signal amplification and filtering. In another preferred embodiment, the electrooculogram input electrode detects weak electooculogramic signals from the sides of nose bridge as the source for further digital signal processing after signal amplification and filtering.

The present invention also provides a method for detecting and preventing sleep comprises
(a) putting a user on a device comprising a pair of sunglasses attached with four electrodes as a reference electrode, an electroencephalogram input electrode, an electrooculogram input electrode, and a stimulating electrode for detecting and calculating electroencephalogram and electrooculogram signals simultaneously;
(b) detecting electroencephalogram and electrooculogram both decreasing and alpha wave increasing to activate the stimulating electrode; and
(c) waking up the user by the stimulating electrode.

The present invention further provides a method for detecting and preventing sleep comprises
(a) putting a user on a device comprising a pair of sunglasses attached with four electrodes as a reference electrode, an electroencephalogram input electrode, an electrooculogram input electrode, and a stimulating electrode for detecting and calculating electroencephalogram and electrooculogram signals simultaneously;
(b) electroencephalogram and electrooculogram both decreasing, but alpha wave without increasing to activate the stimulating electrode;and
(c) waking up the user by the stimulating electrode.

The following examples illustrate the present inventions and are not limited to the same.

EXAMPLES

EXAMPLE 1: Sensor in the present invention

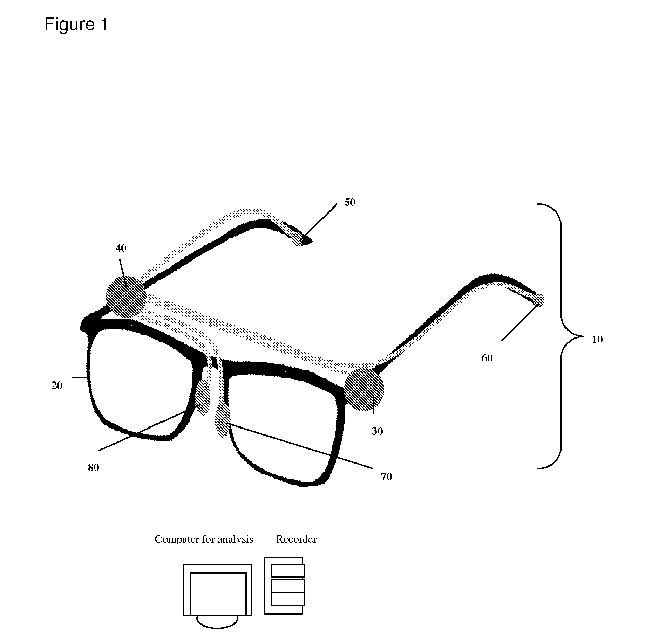

As shown in Figure 1, this sensor comprises four electrodes incorporated into a pair of glasses. Reference (Ref, 50) is a shared reference electrode, electroencephalogram (EEG, 60) is an electroencephalogram input electrode, electrooculogram (EOG, 70) is an electrooculogram input electrode, and stimulation (STI, 80) is a stimulating electrode to generate weak signal to wake up users. Either a battery or an amplifier/receiver is over one side of the glasses. All the electrodes, amplifier and battery are incorporated with a pair of glasses perfectly.

EXAMPLE 2: Operation method of the present invention

As shown in Figure 1, this sensor can be used as regular glasses putting over the nose bridge and ear back. On the two sides of the glasses are a battery and an amplifier/buzzer. All signals from input electrode can be transmitted wirelessly to a receiver, and the receiver can be connected to any computer or portable computer system (cell phone, PDA, or specialized computer system). Physiological signals from computer system can be transmitted to other computers via internet (by wire or wireless transmission) for real-time analysis. If the real-time analysis shows that a user is falling asleep or about to fall asleep, the computer will transmit signals back to the stimulating electrode to generate electricity waking up users.

EXAMPLE 3: Electroencephalogram and electrooculogram signal collection

The electrodes over the ends of the glasses can collect electroencephalogram signals and transmit the signals to an amplifier. The electroencephalogram signals can be transmitted wirelessly to a remote receiving computer for signal analysis. If the system finds out the user is falling asleep or about to fall asleep, this signal will be transmitted to a sensor, and a stimulating signal can be generated by a stimulating electrode on the nose bridge to wake up the user. The input electrode close to the nose bridge can effectively collect electrooculogram signal and transmit it to an amplifier. Wireless transmission can transmit electrooculogram signal to a remote computer for data analysis. If the system finds out the user is going to fall asleep, the stimulating electrode on the nose bridge can generate signals to wake up the user. As shown in Figure 4, within a 120-second period, a tester is at awake status between 0-40 seconds, tester enters quiet resting status around 42 seconds, and tester closes his/her eyes around 53 seconds with obvious changes of electroencephalogram and clear appearance of alpha wave. It also shows reference number changes while user is awakening with electricity stimulation.

EXAMPLE 4: Flow chart of sleep detecting and preventing method
As shown in Figure 3, the method of the present invention comprises
(1) spectrum analysis of EEG and EOG for calculating individual power (EEGp, EOGp),
(2) for EEG signals, specific analysis of alpha wave power (8-13Hz),
(3) when EEGp or EOGp signals are strong, it represents noise signals from movement or strong eye ball movement which means the user is awake,
(4) when EEGp and EOGp signals are reducing, it means the user is falling asleep,
(5) under the status of (4), if alpha wave signal is arising, it means the user's eyes are closed, and
(6) under the status of (4) and (5), the present invention of sleep detecting and preventing device can make appropriate warning to wake up the user.

## Claims

1. A sunglasses type device for detecting and preventing sleep comprises:
(a) a pair of glasses,
(b) a reference electrode, which is attached to the frame of the glasses,
(c) an electroencephalogram input electrode, which is attached to the frame of the glasses,
(d) an electrooculogram input electrode, which is attached to the frame of the glasses, and
(e) a stimulating electrode, which is attached to the frame of the glasses.

2. The device of claim 1, wherein the electroencephalogram input electrode detects weak electroencephalogramic signals from the back of the ear as the source for further digital signal processing after signal amplification and filtering.

3. The device of claim 1, wherein the electrooculogram input electrode detects weak electooculogramic signals from the sides of nose bridge as the source for further digital signal processing after signal amplification and filtering.

4. The device of claim 1, wherein the stimulating electrode generates weak electricity or sound to wake up users and keep users alert.

5. The device of claim 4, wherein the sound is generated by a buzzer.

6. A method for detecting and preventing sleep comprises
(a) putting a user on a device comprising a pair of sunglasses attached with four electrodes as a reference electrode, an electroencephalogram input electrode, an electrooculogram input electrode, and a stimulating electrode for detecting and calculating electroencephalogram and electrooculogram signals simultaneously;
(b) detecting electroencephalogram and electrooculogram both decreasing and alpha wave increasing to activate the stimulating electrode; and
(c) waking up the user by the stimulating electrode.

7. A method for detecting and preventing sleep comprises
(a) putting a user on a device comprising a pair of sunglasses attached with four electrodes as a reference electrode, an electroencephalogram input electrode, an electrooculogram input electrode, and a stimulating electrode for detecting and calculating electroencephalogram and electrooculogram signals simultaneously;
(b) electroencephalogram and electrooculogram both decreasing, but alpha wave without increasing to activate the stimulating electrode;and
(c) waking up the user by the stimulating electrode.

8. The method of claim 6 or 7, wherein the signals generated by sunglasses type sleep detecting and preventing device is transmitted wirelessly to a receiver.

9. The method of claim 8, wherein the receiver is connected to any computer or portable computer system for real-time analysis or to transmit signals to the police or related authorities.

10. The method of claim 9, wherein the portable computer system comprises cell phone, PDA, or specialized computer system.

11. The method of any of the claims 6, 7 or 10, wherein the stimulating electrode generated waking or warning responses comprise weak electricity or sound.

12. The method of any of the claims 6, 7 or 11, wherein the stimulating electrode wakes up or warn the user.

13. The method of claim 12, wherein the stimulating electrode generates sound by a buzzer.
